# FASCICULE DE BREVET EUROPEEN

(11) **EP 0 709 245 B1**
(45) Date de publication et mention de la délivrance du brevet: **15.12.1999**
(21) Numéro de dépôt: 95470035.7
(22) Date de dépôt: 09.10.1995
(51) Int. Cl.: B60K 26/02, B60K 31/02, B60K 31/18, F02D 9/02

(54) **Dispositif d'aide à la conduite d'un véhicule à moteur**
Fahrhilfevorrichtung eines Kraftfahrzeuges
Driving aid for motor vehicles

(30) Priorité: 24.10.1994 FR 9412850
(43) Date de publication de la demande: 01.05.1996
(73) Titulaire: Noel, Jean-Pierre, 88100 Saint Die (FR)
(72) Inventeur: Noel, Jean-Pierre, 88100 Saint Die (FR)
(74) Mandataire: Poupon, Michel

(56) Documents cités:
- WO-A-93/12949
- DE-A- 2 555 429
- FR-A- 2 245 184
- GB-A- 2 193 176
- US-A- 4 367 805
- US-A- 4 714 864

## Description

La présente invention a pour objet un dispositif d'aide à la conduite des véhicules à moteur, plus particulièrement un dispositif destiné à alerter automatiquement le conducteur du véhicule, qu'un événement relatif à une conduite dangereuse apparait et notamment un dépassement de la vitesse maximum autorisée.

Plus précisèment, on peut dire que sur les véhicules à moteur modernes, où l'insonorisation de l'habitacle, le confort des suspensions et la souplesse des moteurs ont été sensiblement améliorés, il devient très difficile de respecter les limitations de vitesse imposée par le code de la route, si l'on ne garde pas un oeil en permanence fixé sur le compteur de vitesse. De même qu'il est difficile d'attirer discrètement l'attention du conducteur pour l'inciter à lire en temps réel les informations que lui délivre le tableau de bord du véhicule.

Le but de l'invention est d'une part de transmettre au conducteur un signal physique discret, perceptible lorsqu'il dépasse la vitesse maximum qui aura été sélectionnée par lui-même, où automatiquement, par une signalisation autoroutière adéquate, et correspondant à ce qu'impose en fonction des impératifs de sécurité une signalisation autoroutière adaptée, et d'autre part, d'annihiler plus ou moins l'action du conducteur sur la commande d'accélération du véhicule lorsque le conducteur n'obtempère pas au signal de ralentissement précédemment transmis.

Les avantages de cette invention se rapportent à une sécurité accrue de la circulation routière où bien évidemment nous savons que les excès de vitesse sont la cause d'un nombre important d'accidents graves. L'objectif de l'invention est d'apporter une réponse moderne à la nécessité de réduire significativement ces accidents, en imaginant un nouveau concept de sécurité où l'invention s'intègre. En effet, l'electronique qui gère notre vie quotidienne peut également et facilement équiper le réseau routier d'émetteurs d'informations autorisant une vitesse du véhicule modulable selon les paramètres relatifs aux difficultés de conduite rencontrées et à l'équipement de sécurités desdits véhicules, lesdites informations étant transmises au conducteur visuellement, il convient de s'assurer qu'il en fera en temps réel bon usage en lui donnant un signal adéquat incitant au ralentissement.

Ce concept de sécurité active à deux niveaux d'alerte peut également s'opposer automatiquement à la conduite dangereuse d'un conducteur irresponsable en réduisant significativement la vitesse du véhicule en cas de besoin par une action de limitation de l'intensité du dosage de l'accélération quelque soit l'action du conducteur sur la pédale d'accélérateur, les capacités de l'électronique étant sans limite dans la gestion du contrôle de ce concept de sécurité active.

Un dispositif pour contrôler des forces sur la pédale d'accélérateur (5) d'un véhicule et pour limiter les mouvements d'un système de commande d'accélération, le système de commande d'accélération du véhicule étant composé d'un organe moteur actionné par un câble (3) reliant un lever (4) de l'organe moteur et la pédale (5) d'accélérateur, le véhicule comportant un capteur de mesure de sa vitesse, et en outre un sélecteur de vitesse sur lequel est sélectionnée manuellement ou automatiquement une vitesse maximum à ne pas dépasser, est connu des documents FR-A-2245184 ou WO-A-9312949.

Conformément à l'invention, le dispositif comporte un ensemble mécanique à ressort installé sur une platine (9) et formé essentiellement de:
- un vérin (19) dont l'extrémité de la tige (20) comporte au moins deux positions stables prédéterminées, à savoir:
   - une position passive (A) dans laquelle ladite extrémité se place si le véhicule circule en dessous de la vitesse maximum sélectionnée et dans laquelle le fonctionnement du câble (3) est totalement libre,
   - une position d'alerte (B) dans laquelle ladite extrémité se place sur ordre d'un calculateur si le véhicule dépasse la vitesse maximum sélectionnée, ayant pour effet de créer un effort (F2) sur la pédale (5) contrariant la pression du pied nécessaire au maintien de l'accélération afin d'alerter le conducteur,
- un lever d'actionnement (16) dont une extrémité est articulée à l'extrémité de la tige (20) du vérin et pivotant à son autre extrémité autour d'un axe de pivotement (13),
- un levier de câble (12) pivotant par une de ses extrémités autour du même axe (13) et solidarisé par son autre extrémité au câble (3), ledit levier de câble étant désolidarisé du levier d'actionnement lorsque la tige de vérin est dans la position (A), et solidarisé au levier d'actionnement lorsque la tige de vérin est dans la position active (B).

Le mode de fonctionnement selon l'invention peut être à sélection manuelle de la vitesse maximum autorisée, le conducteur affichant la vitesse lue sur les panneaux d'indication, et/ou à mode de sélection automatique au travers d'un système de balises d'émission de consignes, captées par un récepteur installé dans le véhicule, un logiciel gérant des programmes types permettant une modulation de la vitesse maximum autorisée en prenant en compte de nombreux paramètres de sécurité. Pour simplifier la description qui va suivre, nous ferons référence au sélecteur de vitesse et admettrons qu'il peut être à commande manuelle ou automatique.

D'autres particularités et avantages de l'invention apparaitrons au cours de la description qui va suivre, faite en référence aux dessins annexés qui en illustrent une forme de réalisation donnée à titre d'exemple non limitatif, l'homme de l'art pouvant sans effort inventif en adapter la réalisation pour en favoriser l'intégration avec des organes déjà existant dans le véhicule, le concept décrit dans ce cas précis étant plus particulièrement adapté à l'équipement de véhicules existants, et indifféremment aux camions, voitures et motos.

La **figure 1** représente le système de commande d'accélérateur des véhicules à moteur le plus souvent rencontré et auquel a été intégré un mode de réalisation préféré de l'invention, l'ensemble étant représenté à l'état repos et dans un mode passif.

La **figure 2** représente le système de la figure 1 dans un état d'accélération moyenne et dans un mode actif d'alerte physique du conducteur.

La **figure 3** représente le système de la figure 1 en mode de sécurité, l'action du conducteur sur la pédale étant inhibée par rapport à l'action du vérin.

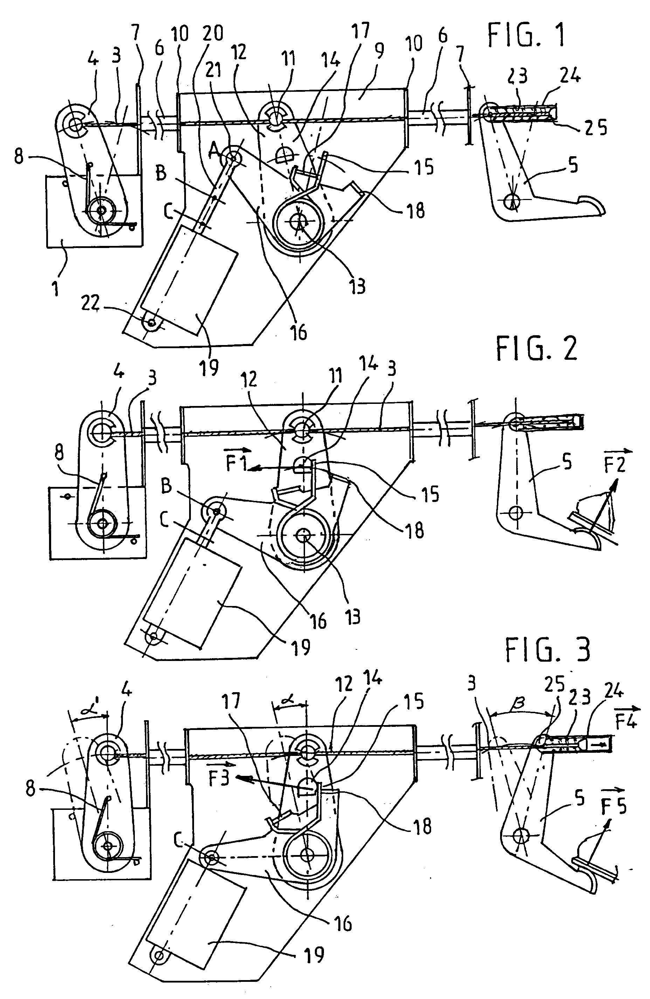

Le système de commande d'accélération du véhicule à moteur, selon la figure 1 est composé d'un organe moteur (1) connu comme pouvant être une pompe à injection, un carburateur ou un rhéostat électrique et actionné dans le sens horaire par un câble (3) de commande relié d'une part à un levier (4) de l'organe moteur et d'autre part à une pédale (5), le câble (3) coulissant dans une gaine (6) limitée par des arrêts (7) selon un agencement connu, le rappel en position de repos du système étant assuré par un ressort de rappel (8) accouplé au levier (4) et à l'organe moteur (1).

Sur un segment du câble de commande (3) est intercalé une platine (9) fixée par des moyens appropriés non représentés au travers de laquelle le câble (3) chemine entre des arrêts (10) de sa gaine (6) pour présenter un moyen (11) d'accouplement à un levier de câble (12) pivotant sur un axe d'articulation (13) et agencé pour que le levier de câble (12) et le câble (3) soient solidaires et que leur interaction autorise les mouvements horaire et anti-horaire du levier de câble (12) quelque soit l'élément moteur de ce mouvement, le levier de câble (12) pouvant recevoir le mouvement donné par la pédale (5), le mouvement donné par un ressort de rappel (8) sur le levier (4) et l'action du ressort escamotable (15) sur la butée (14) ainsi que l'action d'une bûtée (18) du levier d'actionnement (16).

De plus la platine (9) reçoit également, articulé sur l'axe (13), un levier d'actionnement (16) portant solidairement un ressort escamotable précontraint (15) en butée sur une patte de positionnement (17) lui appartenant et dont la plus grande branche est dans le plan du débattement de la bûtée (14) appartenant au levier de câble (12). Ce levier d'actionnement (16) est relié à un vérin (19) dont la tige (20) est connectée sur un axe d'articulation (21) solidaire du levier d'actionnement (16), le vérin (19) étant fixé à la platine (9) par un rivet (22), la tige (20) présentant trois positions prédéterminées et repérées A,B,C.

Le vérin (19) est constitué d'un moteur électrique entraînant une tige de sortie (20) agencée avec une réduction de type vis/écrou non réversible de façon à obtenir trois états stables A,B,C de cette tige (20) et ceci malgré la réaction des ressorts (15,8,23) à laquelle est soumise la tige (20) du vérin (19).

En outre l'extrémité (25) du câble (3) est encapsulée dans un boîtier (24) solidaires de la pédale (5) et coopérant avec un ressort précontraint (23) pour rendre l'action du conducteur sur la pédale (5) inopérante par rapport au mode de fonctionnement de sécurité donné par le vérin (19) et limitant à la valeur angulaire limite le dosage de l'accélération à l'organe moteur.

Le vérin (19) lorsqu'il atteint sa position de sécurité C entraine positivement le levier de câble (12) vers une position angulaire limite α de dosage de l'accélération du véhicule à l'encontre de l'action du conducteur sur la pédale (5) le ressort précontraint (23) agissant sur le câble (3) et inhibant l'action du conducteur.

On décrit à présent le fonctionnement du dispositif.

La **figure 1** montre le système dans un mode passif, lorsque le véhicule à moteur circule en dessous de la vitesse sélectionnée. Le fonctionnement du câble (3) est totalement libre et l'effort d'actionnement à la pédale (5) correspond à l'effort de rappel du système donné par le ressort (8). Le système dont la tige du vérin est en position A se trouve dans un mode passif.

La **figure 2** montre le système dans un mode actif, le calculateur électronique non représenté ayant détecté que le véhicule dépassait la vitesse sélectionnée, il a ordonné au vérin (19) de se mettre en position B, ce qui a pour effet d'amener la branche du ressort (15) en action sur la butée (14) du levier de câble (12) lui délivrant un effort F1 dont l'action sera ressentie par le conducteur du véhicule à moteur au travers d'un effort F2 de rappel de la pédale (5). Cet effort F2 contrariant significativement la pression du pied nécessaire au maintien du dosage de l'accélération dont le ressort (8) assure le rappel vers la position ralenti du moteur, va donner un effet de décélération automatique jusqu'à ce que le pied du conducteur du véhicule à moteur retrouve une position d'équilibre.

Ce mouvement de pied alertera le conducteur qu'il dépasse la vitesse sélectionnée et celui-ci agira en conséquence pour ramener le véhicule à la vitesse maximum autorisée.

La **figure 3** montre le système dans un mode de sécurité. En effet si le conducteur n'obtempère pas à réduire sa vitesse si il en a déjà été alerté, le calculateur électronique va ordonner au vérin (19) de se mettre en position C, ce qui aura pour effet de limiter le dosage B de l'accélération maximum disponible à Line valeur angulaire α quelque soit le dosage angulaire que donnera le conducteur sur la pédale (5) selon le principe d'équilibre des forces suivant :

Le ressort précontraint (23) logé dans un capsule (24) relié par un axe (25) à la pédale (5) ne peut transmettre au câble qu'un effort F4 suffisamment grand pour entrainer sans perte de course le levier de câble (12) et le levier (4) et cela en opposition à l'action des ressorts (8) et (15) mais trop faible pour s'opposer à l'action du vérin lorsque celui-ci va se mettre en position de sécurité C et que la butée (18) du levier d'actionnement (16) aura repoussé le levier de câble (12) par l'intermédiaire de sa bûtée (14) pour l'amener à un angle de dosage α bien que le conducteur conserve un dosage B à la pédale (5), l'effort F4 transmis par le ressort (23) au câble (3) ne pouvant s'opposer à la force F3 transmise au levier de câble (12) par le vérin (19) toutes proportions gardées des bras de leviers où agissent ces forces. Dans cette configuration le conducteur n'a plus d'action possible dans le sens accélération du véhicule et il perçoit au travers de la pédale (5) un effort F5 correspondant à l'effort F4 du ressort précontraint (23). Lorsque le véhicule aura retrouvé une vitesse inférieure au maximum sélectionné le vérin retrouvera la position A de son mode passif, toutes les caractéristiques propres à la puissance du moteur étant utilisables en dessous du seuil de vitesse maximum sélectionnée.

A titre d'exemple non limitatif, le sélecteur à commande manuelle est réalisé sous le forme d'un clavier à six touches réparties sur deux rangs de trois touches relatives aux vitesses réglementaires 50, 70, 90 km/h pour le premier rang et 90, 110, 130 km/h pour le deuxième rang, la commande simultanée de touches voisines sélectionnant la vitesse intermédiaire tel par exemple que 90 + 110 donne une sélection de 100 km/h.

L'invention peut présenter des variantes de réalisation par exemple les variantes ci-après :

Le mécanisme installé sur une platine (9) entre l'organe moteur et la pédale peut avantageusement être agencé pour être intégré à l'organe moteur, le levier de câble (12) pouvant dans ce cas remplacer le levier (4) si on lui en attribue les autres fonctionnalités ou de façon équivalente être inégré à la pédale (5) d'accélérateur du véhicule à moteur.

Le dispositif qui vient d'être décrit peut être réalisé partiellement c'est à dire avec un vérin (19) à deux états stables A et B correspondant aux modes passif et actif lorsqu'il est tributaire d'un sélecteur de vitesse maximum autorisée à commande manuelle.

## Revendications

1. Dispositif pour contrôler des forces sur la pédale d'accélérateur (5) d'un véhicule et pour imiter les mouvements d'un système de commande d'accélération, le système de commande d'accélération du véhicule étant composé d'un organe moteur actionné par un câble (3) reliant un levier (4) de l'organe moteur et la pédale (5) d'accélérateur, le véhicule comportant un capteur de mesure de sa vitesse, et en outre un sélecteur de vitesse sur lequel est sélectionnée manuellement ou automatiquement une vitesse maximum à ne pas dépasser, caractérisé en ce qu'il comporte un ensemble mécanique à ressort installé sur une platine (9) et formé essentiellement de :
- un vérin (19) dont l'extrémité de la tige (20) comporte au moins deux positions stables prédéterminées, à savoir :
• une position passive (A) dans laquelle ladite extrémité se place si le véhicule circule en dessous de la vitesse maximum sélectionnée et dans laquelle le fonctionnement du câble (3) est totalement libre,
• une position d'alerte (B) dans laquelle ladite extrémité se place sur ordre d'un calculateur si le véhicule dépasse la vitesse maximum sélectionnée, ayant pour effet de créer un effort (F₂) sur la pédale (5) contrariant la pression du pied nécessaire au maintien de l'accélération afin d'alerter le conducteur,
- un levier d'actionnement (16) dont une extrémité est articulée à l'extrémité de la tige (20) du vérin et pivotant à son autre extrémité autour d'un axe de pivotement (13),
- un levier de câble (12) pivotant par une de ses extrémités autour du même axe (13) et solidarisé par son autre extrémité au câble (3), ledit levier de câble étant désolidarisé du levier d'actionnement lorsque la tige de vérin est dans la position (A), et solidarisé au lever d'actionnement lorsque la tige de vérin est dans la position active (B).

2. Dispositif selon la revendication 1, caractérisé en ce que, lorsque la tige du vérin prend sa position (B), le levier d'actionnement (16) pivote et entraîne un ressort escamotable en butée sur une patte de positionnement (17) dudit levier d'actionnement (16), jusqu'à ce qu'une branche (15) dudit ressort vienne en appui sur une butée (14) du levier de câble (12) et exerce sur celle-ci un effort (F₁) faisant pivoter ledit levier de câble (12), ce qui a pour effet de transmettre par l'intermédiaire du câble (3) l'effort (F₂) sur la pédale d'accélérateur (5).

3. Dispositif selon l'une des revendications 1 à 2, caractérisé en ce que, lorsque le conducteur n'a pas réagi à l'alerte produite par la force (F₂) sur la pédale (5), le calculateur ordonne à la tige (20) du vérin (19) de se mettre dans une position (C) qui a pour effet de limiter le dosage de l'accélération du véhicule à une valeur angulaire α' quelque soit le dosage angulaire β donné par le conducteur sur la pédale d'accélération (5).

4. Dispositif selon la revendication 3, caractérisé en ce que, lorsque la tige du vérin passe de la position (B) à la position (C), le levier d'actionnement (16) tourne en entraînant une butée (18) bloquant la branche (15) dudit ressort et limitant ainsi le pivotement du levier de câble (12) à une valeur α, quelque soit la pression du conducteur sur la pédale (5).

5. Dispositif selon l'une des revendications 1 à 4, caractérisé en ce que le mécanisme à ressort est intégré à l'organe moteur.

6. Dispositif selon l'une des revendications 1 à 4, caractérisé en ce que le mécanisme à ressort est intégré à la pédale d'accélérateur (5).

7. Dispositif selon l'une des revendications 1 à 6, caractérisé en ce que le vérin (19) est constitué d'un moteur électrique entraînant une tige de sortie (20) agencée avec une réduction de type vis/écrou non réversible de façon à obtenir trois états stables A,B,C de cette tige (20).

8. Dispositif selon l'une des revendications 1 à 7, caractérisé en ce que l'extrémité (25) du câble (3) est encapsulée dans un boîtier (24) solidaires de la pédale (5) et coopérant avec un ressort précontraint (23) pour rendre l'action du conducteur sur la pédale (5) inopérant par rapport au mode de fonctionnement de sécurité donné par le vérin (19) dans sa position (C) et limitant à α' le dosage de l'accélération à l'organe moteur.

## Claims

1. Apparatus for monitoring forces on the accelerator pedal (5) of a vehicle and for limiting the movements of an acceleration control system, the acceleration control system of the vehicle being formed from a driving member actuated by a cable (3) connecting a lever (4) of the driving member and the accelerator pedal (5), the vehicle comprising a sensor for measuring its speed and also a speed selector, on which a maximum speed which is not to be exceeded is selected manually or automatically, characterised in that it comprises a mechanical spring assembly installed on a plate (9) and substantially formed from:
- a jack (19), the end of the shaft (20) of which jack comprises at least two predetermined stable positions, namely:
• a passive position (A), in which said end is placed if the vehicle is travelling below the maximum selected speed, and in which the operation of the cable (3) is totally free,
• a warning position (B), in which said end is placed when commanded by a computer if the vehicle exceeds the maximum selected speed, the effect of which is to create a force (F₂) on the pedal (5), counteracting the pressure of the foot necessary to maintain the acceleration, in order to warn the driver,
- an actuating lever (16), one end of which is connected to the end of the shaft (20) of the jack, and said lever pivoting, at its other end, about a pivotal axis (13),
- a cable lever (12) pivoting by one of its ends about the same axis (13) and connected, by its other end, to the cable (3), said cable lever being disconnected from the actuating lever when the shaft of the jack is in position (A) and being connected to the actuating lever when the shaft of the jack is in the active position (B).

2. Apparatus according to claim 1, characterised in that, when the shaft of the jack takes up its position (B), the actuating lever (16) pivots and causes a retractable spring to abut against a positioning foot (17) of said actuating lever (16) until an arm (15) of said spring comes to rest against a stop (14) of the cable lever (12) and exerts upon said stop a force (F₁), causing said cable lever (12) to pivot, and this has the effect of transmitting the force (F₂) to the accelerator pedal (5) through the intermediary of the cable (3).

3. Apparatus according to one of claims 1 to 2, characterised in that, when the driver has not reacted to the warning produced by the force (F₂) on the pedal (5), the computer commands the shaft (20) of the jack (19) to move into a position (C), and this has the effect of limiting the amount of acceleration of the vehicle to an angular value α', whatever the angular amount β imparted by the driver to the accelerator pedal (5).

4. Apparatus according to claim 3, characterised in that, when the shaft of the jack passes from position (B) to position (C), the actuating lever (16) rotates and thereby entrains a stop member (18) which jams the arm (15) of said spring and thus limits the pivotal movement of the cable lever (12) to a value α, whatever the pressure exerted by the driver on the pedal (5).

5. Apparatus according to one of claims 1 to 4, characterised in that the spring mechanism is incorporated in the driving member.

6. Apparatus according to one of claims 1 to 4, characterised in that the spring mechanism is incorporated in the accelerator pedal (5).

7. Apparatus according to one of claims 1 to 6, characterised in that the jack (19) comprises an electric motor, which drives an output shaft (20) provided with a non-reversible screw/nut type of reduction means, in order to obtain three stable states A, B and C for this shaft (20).

8. Apparatus according to one of claims 1 to 7, characterised in that the end (25) of the cable (3) is encapsulated in a casing (24), which is integral with the pedal (5) and co-operates with an initially tensioned spring (23) to make the action of the driver on the pedal (5) ineffective against the safety operation imparted by the jack (19) in its position (C) and limiting the amount of acceleration to the driving member to α'.

## Patentansprüche

1. Vorrichtung zum Steuern der Kräfte auf ein Fahrpedal (5) eines Fahrzeugs und zum Begrenzen der Bewegung eines Leistungsstellsystems, wobei das Leistungsstellsystem des Fahrzeugs ein Motororgan hat, das durch ein Seil betätigt wird, welches mit einem Hebel des Motororgans und dem Fahrpedal (5) verbunden ist und das Fahrzeug einen Geschwindigkeitsmesssensor und weiterhin eine Geschwindigkeitseingabe hat, mit dem manuell oder automatisch eine nicht zu überschreitende Geschwindigkeit einstellbar ist, **dadurch gekennzeichnet**, dass sie eine mechanische Federanordnung aufweist, welche auf einer Tragplatte (9) angeordnet ist und im Wesentlichen aus folgendem besteht:
- ein Stellantrieb (19), bei dein das Ende seiner Stellstange zumindest zwei vorherbestimmte, stabile Positionen einzunehmen vermag, nämlich
eine passive Position (A), in der sich das genannte Ende befindet, wenn das Fahrzeug mit einer Geschwindigkeit unterhalb der eingegebenen, maximalen Geschwindigkeit fährt und bei der die Funktion des Seiles (3) völlig frei ist,
eine Warnfunktion (B), in welche das genannte Ende sich aufgrund eines Befehls eines Rechners bewegt, wenn das Fahrzeug die eingegebene, maximale Geschwindigkeit überschreitet, was zur Folge hat, dass eine Kraft (F₂) auf das Pedal (5) ausgeübt wird, die dem Druck des Fußes zum Aufrechterhalten des Fahrzustandes entgegenwirkt, um den Fahrer zu warnen,
- einen Betätigungshebel (16), von dem ein Ende an dem Ende der Stellstange (20) des Stellantriebs angelenkt ist und der mit seinem anderen Ende um eine Drehachse (13) zu schwenken vermag,
- ein Seilzughebel (12), welcher mit einem seiner Enden um dieselbe Drehachse (13) zu schwenken vermag und mit seinem anderen Ende mit dem Seil (3) verbunden ist, wobei der genannte Seilhebel von dein Betätigungshebel abgetrennt wird, wenn die Stellstange des Stellantriebs sich in der Position A befindet und mit dein Betätigungshebel gekuppelt wird, wenn sich die Stellstange des Stellantriebs in der aktiven Position B befindet.

2. Vorrichtung nach Anspruch 1, **dadurch gekennzeichnet**, dass sich der Betätigungshebel (16) bei Einnahme der Position (B) der Stellstange des Stellantriebs verschwenkt und eine Einziehfeder gegen einen Anschlag auf einer Stellklaue (17) des genannten Betätigungshebels (16) mitführt, bis dass ein Schenkel (15) der genannten Feder sich gegen einen Anschlag (14) des Seilzughebels (12) abstützt und auf diesen eine Kraft (F₁) ausübt, wodurch der genannte Seilzughebel (12) sich zu verschwenken beginnt und was zur Folge hat, dass durch das zwischengeschaltete Seil (3) eine Kraft (F₂) auf das Fahrpedal (5) ausgeübt wird.

3. Vorrichtung nach einem der Ansprüche 1 bis 2, **dadurch gekennzeichnet**, dass bei ausbleibender Reaktion des Fahrers auf die Warnung durch die Kraft (F₂) auf das Pedal (5), der Rechner der Stellstange (20) des Stellantriebs (19) den Befehl gibt, sich in die Position (C) zu verstellen, was zur Folge hat, dass die Fahreinstellung des Fahrzeugs auf einen Winkelbetrag α' begrenzt wird, auch wenn die Winkeleinstellung, welche der Fahrer durch das Fahrpedal vorgibt β beträgt.

4. Vorrichtung nach Anspruch 3, **dadurch gekennzeichnet**, dass beim Übergang der Stellstange des Stellantriebs von der Position (B) zur Position (C) der Betätigungshebel (16) sich verschwenkt und dabei einen Anschlag (18) mitführt, der den Schenkel (15) der genannten Feder festsetzt und dadurch die Schwenkung des Seilzughebels (12) unabhängig von der Kraft des Fahrers auf das Pedal (5) auf einen Wert α begrenzt.

5. Vorrichtung nach einem der Ansprüche 1 bis 4, **dadurch gekennzeichnet**, dass der Federmechanismus in das Motororgan integriert ist.

6. Vorrichtung nach einem der Ansprüche 1 bis 4, **dadurch gekennzeichnet**, dass der Federmechanismus in das Fahrpedal integriert ist.

7. Vorrichtung nach einem der Ansprüche 1 bis 6, **dadurch gekennzeichnet**, dass der Stellantrieb (19) durch einen Elektromotor gebildet ist, welcher eine ausgangsseitige Stellstange (19) über eine Untersetzung in Form einer selbsthemmenden Spindel mit Mutter antreibt, so dass die Stellstange (20) drei stabile Zustände A, B, C einzunehmen vermag.

8. Vorrichtung nach einem der Ansprüche 1 bis 7, **dadurch gekennzeichnet**, dass das Ende des Seils (3) von einem mit dem Pedal (5) verbundenen Gehäuse (24) umschlossen ist, welches mit einer Vorspannfeder (23) zusammenarbeitet, so dass die Betätigung des Fahrers auf das Pedal (5) wirkungslos in Bezug auf die durch den Stellantrieb (19) gegebene Sicherheitsfunktion in der Position (C) ist und die die Leistungseinstellung des Motororgans auf α' begrenzt.
